# EUROPEAN PATENT SPECIFICATION

(11) **EP 1 850 529 B1**
(45) Date of publication and mention of the grant of the patent: **10.09.2008**
(21) Application number: 07075610.1
(22) Date of filing: 29.06.2004
(51) Int. Cl.: H04L 12/24

(54) **System and method for the design and description of networks**
System und Verfahren zum Designen und Beschreiben von Netzwerken
Système et procédé pour la conception et la description de réseaux

(30) Priority: 30.06.2003 US 611786
(43) Date of publication of application: 31.10.2007
(62) Divisional of application: 04756463.8
(73) Proprietor: Intel Corporation, Santa Clara, CA 95052 (US)
(72) Inventor: Rover, Jeremy, Beaverton, OR 97006 (US); Sistla, Amber, Hillsboro, OR 97124 (US)
(74) Representative: Beresford, Keith Denis Lewis

(56) References cited:
- US-A1- 2003 120 955
- SHEN C-C ET AL: "THE NETWORK AS DISTRIBUTED OBJECT DATABASE" NOMS '98. 1998 IEEE NETWORK OPERATIONS AND MANAGEMENT SYMPOSIUM. NEW ORLEANS, LA, FEBR. 15 - 20. 1998, IEEE NETWORK OPERATIONS AND MANAGEMENT SYMPOSIUM, NEW YORK, NY : IEEE, US, vol. VOL. 2 CONF. 10, 15 February 1998 (1998-02-15), pages 540-548, XP000799525 ISBN: 0-7803-4352-2

## Description

### RELATED APPLICATIONS

This patent is related to the following contemporaneously filed nonprovisional patent applications: U.S. Patent Application serial number <042390.P 17060>, entitled, "System and Method for Programmatically Changing the Physical Network Location of a Network Device;" U.S. Patent Application serial number <042390.P17061>, entitled "System and Method for Describing Network Resource Availability and Associations;" U.S. Patent Application serial number <042390.P17062>, entitled "System and Method for Synchronous Configuration of Dynamic Host Configuration Protocol (DHCP) Server and Router Interfaces"; and U.S. Patent Application serial number <042390.P17059>, entitled "System and Method for Dynamically Configuring and Transitioning Wired and Wireless Networks."

### TECHNICAL FIELD

Embodiments of the invention generally relate to the field of networks and, more particularly, to a system and method for the design and description of networks.

### BACKGROUND

Mobile networking technologies are driving an evolution in the use and structure of networks. For example, users of mobile networking technologies expect to stay connected as they move from place to place and from network to network. Furthermore, users of mobile networking technologies expect easy and seamless network interface transitions as they move from place to place.

The term network component broadly refers to a node (e.g., a desktop, laptop, etc.) or a collection of nodes (e.g., a virtual private network, a subnet, a virtual local area network, etc.). The term node refers to a network component having a network interface. Examples of a node include switches, routers, servers, clients, workstations, laptops, handhelds, printers, hubs, and the like.

The movement of network components from place to place and network to network fosters constantly changing network infrastructures and topologies. Network components are typically configured to interact with particular network infrastructures and topologies. The term configuration can be used with respect to a network component or to an entire network. When used in association with a network component, configuration refers to the settings of software, hardware, and firmware that enable the network component to exchange information with a network. In a broader sense, configuring a network refers to configuring a plurality of network components to exchange information with one other.

Modem networking technologies increase the variety of network components that interact with a network and, also, the frequency at which these interactions occur. These interactions produce a combinational explosion of heterogeneous networks composed of many different network components each having a distinct configuration. This combinational explosion of heterogeneous networks is further complicated by the possibility that an initial network configuration changes over time as network components are added and removed from the network.

Document US 2003/120955 by Bartal et al., 26.06.2003, and document "The network as distributed object database" by Shen C-C et al., 15-20.02.1998, describe known systems and methods for the design and description of networks.

The present invention relates to a method for transitioning a node from one subnet to another subnet, as defined in claims 1-13, a corresponding network as defined in claims 14-18 and a corresponding article of manufacture as defined in claims 19-24.

### BRIEF DESCRIPTION OF THE DRAWINGS

Embodiments of the invention are illustrated by way of example, and not by way of limitation, in the figures of the accompanying drawings in which like reference numerals refer to similar elements.
**Figure 1** is block diagram illustrating an embodiment of the invention abstracted into four layers.
**Figure 2** illustrates selected elements of exemplary network resource and association file 200.
**Figure 3** is an illustration of an exemplary current network state snapshot 300.
**Figure 4** is an exemplary illustration of network resource wrapper function call 400 with possible function parameters.
**Figure 5** illustrates exemplary network configuration request 500.
**Figure 6** is a conceptual illustration of selected interactions between abstract functional layers in network 600, according to an embodiment of the invention.
**Figure 7** is a flow diagram illustrating certain aspects of a method for describing a network, according to an embodiment of the invention.
**Figure 8** is a flow diagram illustrating certain aspects of a method for automatically configuring a node according to an embodiment of the invention.
**Figure 9** is a flow diagram illustrating certain aspects of a method for automatically transitioning a node according to an embodiment of the invention.
**Figure 10** is a more detailed flow diagram illustrating selected aspects of a method for configuring a network according to an embodiment of the invention.
**Figure 11** is a more detailed flow diagram illustrating selected aspects of a method for network transition according to an embodiment of the invention.
**Figure 12** is a flow diagram illustrating selected aspects of a method for controlling network configuration and transition according to an embodiment of the invention.
**Figure 13** is a flow diagram illustrating selected aspects of a method for randomly generating network scenarios according to an embodiment of the invention.
**Figure 14** is a simplified block diagram of selected elements of exemplary node 1400, implemented according to an embodiment of the invention.
**Figure 15** is a block diagram of selected elements of exemplary network 1500, implemented according to an embodiment of the invention.

### DETAILED DESCRIPTION

Embodiments of the invention provide a standardized system and method for the design and description of networks. The standardized network description allows, for example, network designs to be shared and understood without the need for in-depth configuration knowledge of each network component. The standardized network description may be used, for example, to request a network configuration or to provide a "snapshot" of an existing network configuration. For ease of discussion the term configure is hereinafter used to mean both configure and reconfigure. The flexible format of the standardized network description allows for the inclusion (or exclusion) of new technologies and network components as they become available.

### OVERVIEW OF THE FUNCTIONAL LAYERS

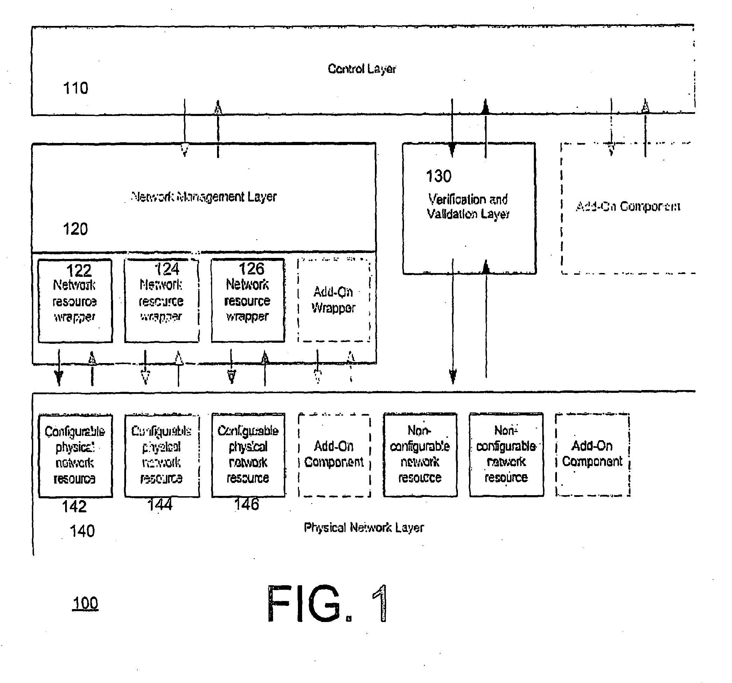

To provide the above stated functions, embodiments of the invention may be abstracted into four layers: the control layer, the network management layer, the verification and validation layer, and the physical network layer. FIG. 1 is block diagram illustrating an embodiment of the invention abstracted into four layers. In alternative embodiments of the invention, the functions may be abstracted into more layers or fewer layers. FIG. 1 includes control layer 110, network management layer 120, verification and validation layer 130, and physical network layer 140.

Control layer 110 may provide a single control point for functions provided by embodiments of the invention. Control layer 110 may be accessed through a console directly on a node in close proximity to the network or through a remote login session (e.g., Telnet). The functions of control layer 110 include generating network scenarios and directing the other layers to configure and transition the network based on the generated network scenarios, in an embodiment of the invention.

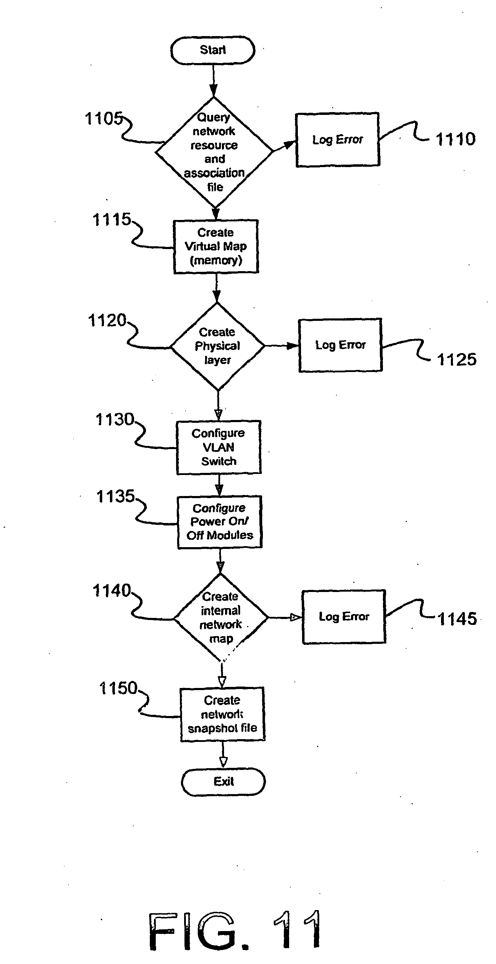

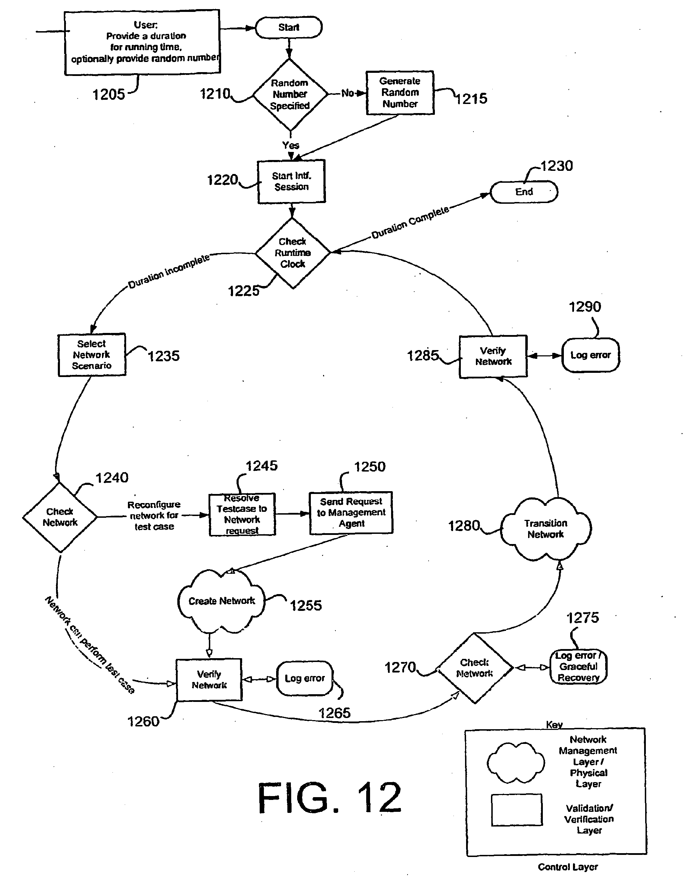

Network scenarios may be generated randomly or may be based on predefined network configurations, in an embodiment of the invention. Also, control layer 110 may generate a series of network scenarios back-to-back. Each series of network scenarios can be reproduced by supplying a seed logged in past scenarios, in an embodiment of the invention. Randomly generating network scenarios is further described below with respect to FIG. 11 and FIG. 12.

Control layer 110 determines the current physical layout and state of the network based on its interactions with network management layer 120 and verification and validation layer 130, in an embodiment of the invention. As will be further described below, control layer 110 accesses network management layer 120 to perform network configurations and network transitions. Transitioning a node broadly refers to, for example, transitioning a node from a first network interface to a second interface, and/or from a first subnet to a second subnet, and/or from a first Virtual Local Area Network (VLAN) to a second VLAN, and/or from a first topology to a second topology. The term network transition refers to transitioning one or more nodes within the network.

Network management layer 120 provides a number of functions including network configurations, network transitions, and maintenance of current network state information, in an embodiment of the invention. Network management layer 120 may be a stand-alone component for managing and reconfiguring network components. In alternative embodiments of the invention, network management layer 120 functions in association with the other layers illustrated in FIG. 1. In such an embodiment, the other layers may obtain network state information from network management layer 120.

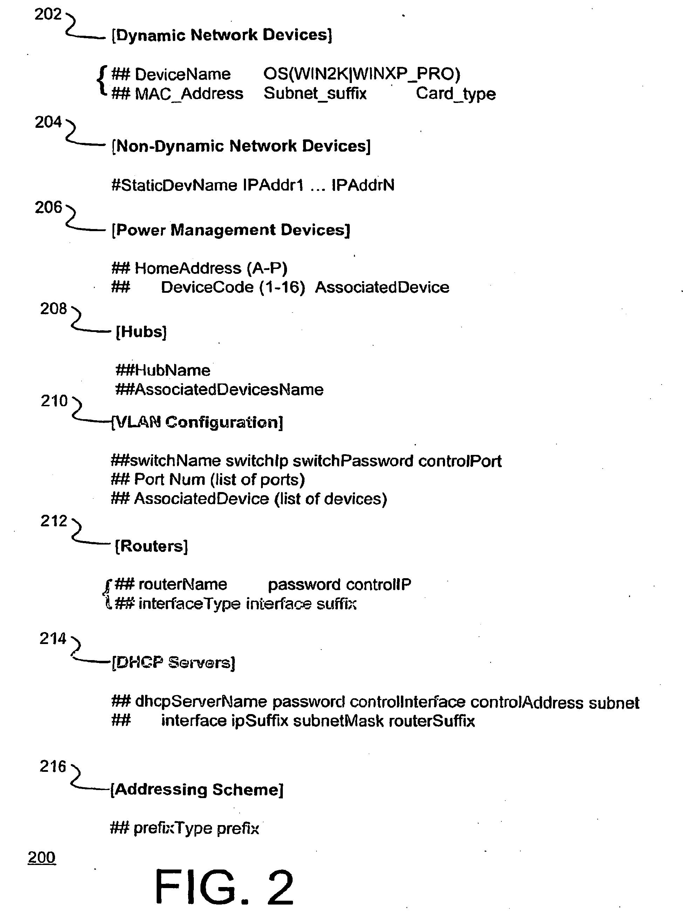

FIG. 2 illustrates selected elements of exemplary network resource and association file 200. Network resource and association file 200 includes: dynamic network device section 202, non-dynamic network device section 204, power management device section 206, hubs section 208, Virtual Local Area Network (VLAN) switch section 210, router section 212, Dynamic Host Configuration Protocol (DHCP) server section 214, and addressing scheme section 216. A DHCP server refers to a network component that provides network administrative services in compliance with Request For Comments 2131 entitled, "Dynamic Host Configuration Protocol," R. Droms, March 1997. As illustrated in FIG. 2, network resource and association file 200 describes available network resources and associations in a standardized syntax. Related U.S. Patent Application serial number <042390.P17061> further describes network resource and association files.

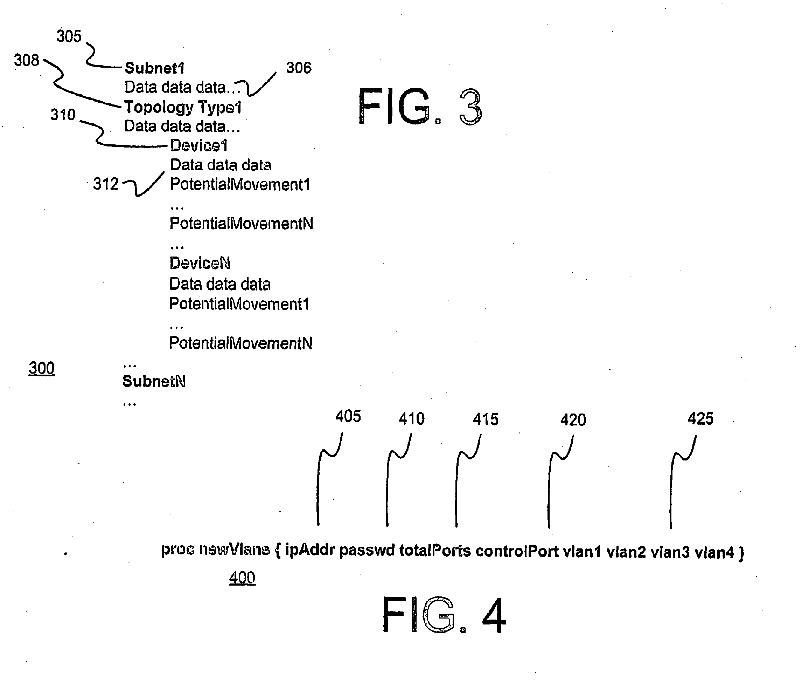

Network management layer 120, in an embodiment of the invention, is responsible for configuring networks and transitioning networks. As is further discussed below in regard to FIG. 4, network resource wrappers 122, 124, and 126 may be used to configure and transition networks. In addition, network management layer 120 may maintain IP address allocation for network components and generate a readable text file that reports each IP address to facilitate communication across the network. After each network configuration and/or transition, network management layer 120 may generate a snapshot of the current network state.

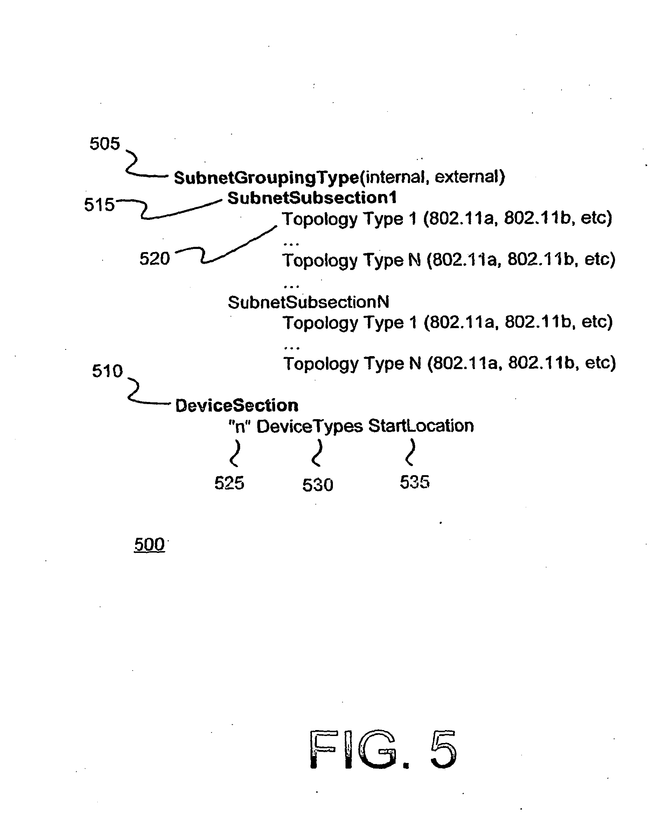

FIG. 3 is an illustration of an exemplary current network state snapshot 300. The illustrated embodiment of current network state snapshot 300 is organized according to one or more subnet sections (e.g., subnet section 305). In an embodiment of the invention, the one or more subnet sections may be further categorized into one or subnet groupings. Subnet groupings are further described below with regards to FIG. 5.

Reference numeral 306 illustrates that subnet section 305 may contain descriptive data (e.g., subnet mask, gateway, etc.). Subnet section 305 may also contain one or more network topology type section(s) 308. Network topology type section 308 specifies that the subnet is supported (or is to be supported) by a particular type of network topology. For example, the subnet may be supported by a topology that complies with the IEEE 802.11 standard, entitled "Wireless LAN Medium Access Control (MAC) and Physical Layer (PHY) Specifications, 1999 Edition;" and/or the IEEE 802.3 standard, entitled "Standard for Information Technology--Telecommunications and Information Exchange Between Systems--Local and Metropolitan Area Networks," 2002 Edition. A person of ordinary skill in the art appreciates that network topology type section 308 may specify a wide range of network topology types.

Network topology type section 308 may include node section 310, in an embodiment of the invention. Node section 310 may include information about the potential movement of a node. Information about potential movement may include a list of network topologies based on network topologies and interfaces available to the node. For example, if a node contains an 802.11a network interface (and an 802.11a access point exists on the network), the node may be able to make a transition to a wireless network connection. A node that has an 802.11a network interface refers to a node having a network interface that complies with the IEEE 802.11a standard entitled, "Wireless Medium Access Control (MAC) and physical layer (PHY) specifications: High Speed Physical Layer in the 5 GHz Band," Edition 1999. Similarly an 802.11a access point refers to an access point that complies with the IEEE 802.11a standard. Information about a potential movement is not limited to network interfaces in an embodiment of the invention, as multiple network subnets may be reached using the same network interface/topology type based on the current network snapshot. Reference numeral 312 illustrates that node section 310 may specify node specific data (e.g., an IP address, subnet mask, gateway, etc.), in an embodiment of the invention.

After a network transition, multiple sections of network state snapshot 300 may be updated since some network transitions affect multiple network components. Network management layer 120 uses network resource wrappers to programmatically configure network components, in an embodiment of the invention. The term programmatically broadly refers to action performed by a software, hardware, and/or firmware resource of one or more network components. Network resource wrappers abstract the functionality of a network component in a standardized way that allows network components to be interchanged when the components provide the same (or similar) functionality, in an embodiment of the invention.

FIG. 4 is an exemplary illustration of network resource wrapper function call 400. Network resource wrapper function call 400 may be used, for example, to configure a VLAN switch. A person of ordinary skill in the art appreciates that similar network components may be configured with similar network resource wrappers. In an embodiment of the invention, there is a network resource wrapper corresponding to each configurable network component in a network. Table 1 provides a description of the fields of exemplary network resource wrapper function call 400.

**TABLE 1**

| Field | Description |
|---|---|
| IpAddr 405 | IpAddr 405 is the IP address from which the VLAN switch can be configured, in an embodiment of the invention. |
| Passwd 410 | Passwd 410 may be used to, for example, enable a Telnet session to the VLAN switch. |
| TotalPorts 415 | TotalPorts 415 represents the total number of ports on the VLAN switch. |
| ControlPort 420 | ControlPort 420 is the port from which the VLAN switch is being controlled, in an embodiment of the invention. |
| VLAN1, VLAN2, ..., VLANn 425 | VLAN1, VLAN2, ..., VLANn 425 provides one or more fields for representations of ports that are to be added to each VLAN. |

Referring again to FIG. 1, verification and validation layer 130 abstracts all devices that are used to verify and validate the current network configuration. These devices may include, for example, packet sniffers, traffic generators, and other network validation devices. In an embodiment of the invention, third party verification tools and/or proprietary tools can be added to this layer to provide seamless accessibility to a wide range of network analysis and traffic generation tools.

In an embodiment of the invention, the network validation devices are mobile. For example, during network scenario execution, network validation devices may be placed on the particular subnet that requires validation. In contrast, conventional network validation typically involves the manual movement of validation devices from one subnet to another, and/or one VLAN to another, and/or one network interface to another.

Control layer 110 interoperates with verification and validation layer 130 to perform graceful state recovery, in an embodiment of the invention. During the execution of a network scenario, verification and validation layer 130 detects and logs results to report to the control layer. Control layer 110 determines whether to perform graceful state recovery based on the errors, if any, logged and reported by the verification and validation layer. Graceful state recovery refers to reconfiguring network components to a state they were in before an error occurs during the execution of a network scenario.

Physical network layer 140 contains the physical network resources of network 100 (e.g., physical network resources 142, 144, and 146). In an embodiment of the invention, physical network resources 142, 144, and 146 correspond to the network resource wrappers 122, 124, and 126 described above with respect to FIG. 4. Control layer 110 may request the functionality of the physical network resources 142, 144, and 146 through a network configuration request.

FIG.5 illustrates exemplary network configuration request 500. Network configuration request 500 includes subnet grouping section 505 and device section 510. Subnet grouping section 505 may be used to organize a plurality of subnet subsections (e.g., subnet subsection 515). A subnet may be categorized as belonging within subnet grouping section 505 based, at least in part, on whether the subnet is an internal subnet or an external subnet. In an embodiment of the invention, a subnet is an external subnet if it belongs to the portion of the network that is associated with an external or non-secure interface of a firewall, and a subnet is an internal subnet if it belongs to the portion of the network that is associated with an internal or secure interface of a firewall. A person of ordinary skill in the art appreciates that classifying a subnet as internal or external may be based on accessibility to the secure and non-secure interfaces of a VPN and/or the presence (or lack thereof) of a firewall and/or other criteria, in an alternative embodiment of the invention.

Subnet subsection 515 may list one or more network topology type(s) 520. Network topology type 520 specifies that subnet subsection 515 should support a particular type of network topology, in an embodiment of the invention. For example, network topology type 520 may specify that subnet subsection 515 supports one of the following standards: the IEEE 802.11a standard; the IEEE 802.11b standard entitled, "Wireless LAN Medium Access Control (MAC) and Physical Layer (PHY) Specifications: Higher Speed Physical Layer (PHY) Extension in the 2.4 GHz band," Edition 1999; the IEEE 802.11 g standard, entitled "Wireless LAN Medium Access Control (MAC) and Physical Layer (PHY) specifications Amendment 4: Further Higher Data Rate Extension in the 2.4 GHz Band," Edition 2003; or the IEEE 802.3 standard. A person of ordinary skill in the art appreciates that network topology type 520 may specify a topology that complies with a standard other than one of the above listed standards, in an embodiment of the invention.

Device section 510 may include information about nodes within a requested network configuration and a start position for mobile nodes within a requested network configuration. In an embodiment of the invention, field 525 specifies a number of nodes of a particular type 530 having a starting location on the network of 535. For example, starting location 535 specifies which Local Area Network (LAN), or which wireless LAN, (within a network having more than one LAN) contains node(s) of type 530, in an embodiment of the invention. A person of ordinary skill in the art appreciates that starting location 535 may specify a topology that complies with a standard other than one of the above listed standards, in an embodiment of the invention.

In operation, control layer 110 may send a network configuration request to network management layer 120. Network management layer 120, in turn, may use network resource wrappers to programmatically configure the physical resources in physical network layer 140. When new physical resources are added to network 100, corresponding network wrappers may be written to network management layer 120 to abstract the functionality of the new resource. In an embodiment of the invention, non-configurable network resources may be added and/or removed from network 100 at will because network resource wrappers are not needed to interact with non-configurable network resources.

### INTERACTIONS AMONG THE LAYERS

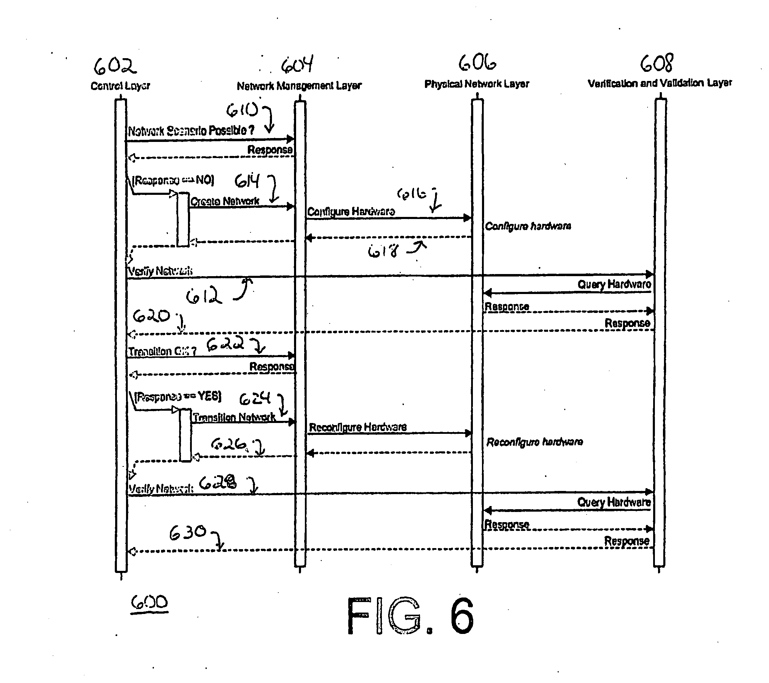

FIG. 6 is a conceptual illustration of selected interactions between abstract functional layers in network 600, according to an embodiment of the invention. Network 600 includes control layer 602, network management layer 604, physical network layer 606, and verification and validation layer 608. A person of ordinary skill in the art will appreciate that, in alternative embodiment embodiments of the invention, network 600 may include more layers or fewer layers.

A user may provide an input to initiate a network scenario, in an embodiment of the invention (not shown). Control layer 602 queries network management layer 604 to determine if executing the network scenario is possible given the current network configuration at 610. If the network scenario is supported in the current network configuration, control layer 602 initiates network verification and validation at 612.

Otherwise control layer 602 resolves the network scenario into a network configuration and creates a corresponding network configuration request at 614. The network configuration request may contain one or more subnets as well as the starting position on the network for mobile nodes. Network management layer 604 configures the network at 616 and reports success or failure of the configuration at 618. If network management layer 604 does not report any failures occurring during the configuration process, control layer 602 triggers the verification and validation layer 608 at 612. Verification and validation layer 608 performs network verification and/or validation tests and reports the findings to control layer 602 at 620.

A network scenario may include transitioning one or more nodes. For example, a network scenario may include transitioning a node from a wired LAN connection to a wireless LAN connection. Control layer 602 queries network management layer 604 to determine whether a transition is supported by the network configuration at 622. If the transition is supported then control layer 602 requests the transition at 624. Network management layer 604 reports success or failure of the transition at 626. If the transition is successful, control layer 602 prompts verification and validation layer 608 to perform appropriate tests at 628 and report the findings to control layer 602 at 630.

Embodiments of the invention may iterate the network configuration and transition processes to enable multiple network scenarios to occur one after another. Alternatively, the network scenario process may terminate after a single iteration. In such an embodiment, the findings of the completed network scenario may be reported to a user and a pseudo-random seed to reproduce the network scenario may be stored. Random generation of network scenarios is further described below with regards to FIG. 12.

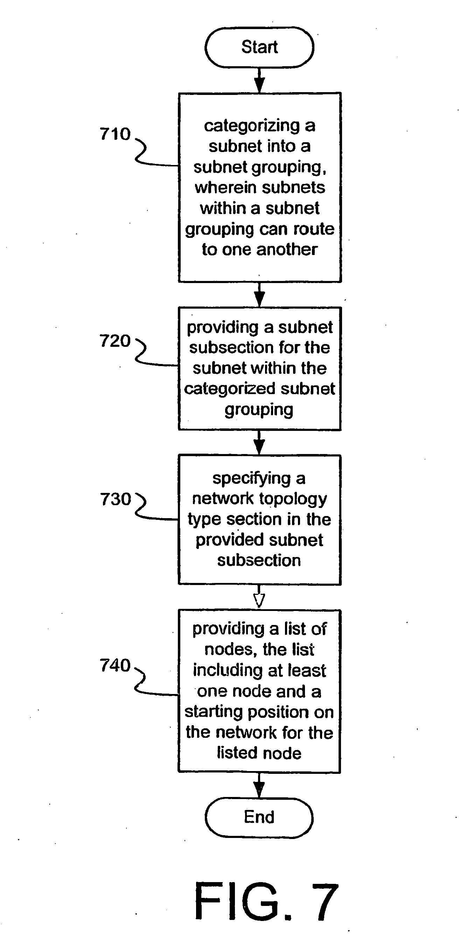

Turning now to FIGS. 7-13, the particular methods associated with embodiments of the invention are described in terms of computer software and hardware with reference to a flowchart. The methods to be performed by a control layer and/or a management layer may constitute state machines or computer programs made up of computer-executable instructions. Describing the methods by reference to a flowchart enables one of ordinary skill in the art to develop such programs including such instructions to carry out the methods on suitably configured computing devices (e.g., one or more processors of a network element) executing the instructions from computer-accessible media. The computer-executable instructions may be written in a computer programming language or may be embodied in firmware logic. If written in a programming language conforming to a recognized standard, such instructions can be executed on a variety of hardware platforms and for interface to a variety of operating systems. In addition, embodiments of the invention are not described with reference to any particular programming language. It will be appreciated that a variety of programming languages may be used to implement the teachings of the invention as described herein. Furthermore, it is common in the art to speak of software, in one form or another (e.g., program, process, procedure, agent, application, etc.), as taking an action or causing a result. Such expressions are merely a shorthand way of saying that execution of the software by a computing device causes the device to perform an action or produce a result. For ease of discussion, the entities performing the functions of each layer are hereinafter referred to as agents. For example, the entity (or entities) performing the functions of the control layer is referred to as the control agent. An agent may be executable content, control logic, firmware, or some combination thereof, in an embodiment of the invention.

FIG. 7 is a flow diagram illustrating certain aspects of a method for describing a network, according to an embodiment of the invention. The method of describing a network may be used, for example, to request a particular network configuration and/or to provide a snapshot of an existing network configuration. A person of ordinary skill in the art appreciates that a network description used to request a particular network configuration may be different than a network description used to provide a snapshot of an existing network configuration. Referring to process block 710, a control agent (not shown) categorizes a subnet (or a plurality of subnets) into a subnet grouping. In an embodiment of the invention, subnets within a subnet grouping can route to one another. The subnet groupings may be based, at least in part, on whether the categorized subnet is an internal subnet or an external subnet, in an embodiment of the invention. In some embodiments of the invention, there is only one subnet group into which subnets are categorized. For further information regarding the categorization of subnets into subnet groups see, for example, FIG. 5 and the related description.

Referring to process block 720, a subnet subsection is provided to a subnet grouping. In an embodiment of the invention, each categorized subnet is provided a subnet subsection. The provided subnet subsections may, for example, specify requested network topology types for each associated subnet.

Referring to process block 730, a network topology type section is specified for the provided subnet subsection. Network topology type sections may be used to request the support of particular network topology types, in an embodiment of the invention. For example a first network topology type section may request that the subnet be supported by a topology that is compliant with the IEEE 802.3 standard. A second network topology type section may also request that the subnet be supported by a typology that is compliant with the IEEE 802.11 standard. A person of ordinary skill in the art appreciates that network topology type sections may be used to request any of a number of topology types, in an embodiment of the invention.

Referring to process block 740, the control agent provides a list of nodes containing at least one node, in an embodiment of the invention. In an embodiment of the invention, the list of nodes specifies a starting position on the network for the listed node. In an embodiment of the invention, the list of nodes is separate from the subnet groupings (as illustrated in FIG. 5).

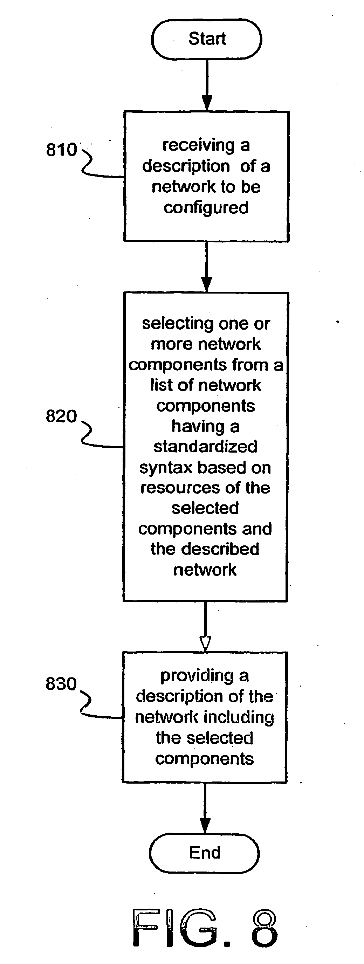

FIG. 8 is a flow diagram illustrating certain aspects of a method for automatically configuring a network according to an embodiment of the invention. Referring to process block 810, a network management agent (not shown) receives a description of a network to be configured. In an embodiment of the invention, the network management agent resides on a DHCP server. In an alternative embodiment of the invention, the network management agent may reside on a control node. A person of ordinary skill in the art appreciates that the network management agent may reside on any of a number of different network components or may be distributed among a number of network components.

The received description of a network to be configured may be human-readable. The term human-readable refers to a description that when displayed on an output device (e.g., a monitor, printer, etc.) is understandable to a human reader. The received description may be randomly generated or it may be a predetermined description of a network to be configured. If the received description is predetermined, then it may be received from a database of predetermined network descriptions or the description may be provided by a user. In an embodiment of the invention, the received description has a standardized syntax. Network configuration request 500 shown in FIG. 5 is but one example of a received description of a network having a standardized syntax.

Referring to process block 820, in an embodiment of the invention, the network management agent selects one or more network components from a list of network components. The selection may be determined, at least in part, on whether the resources of the selected network component provide a resource requested in process block 810. For example, in an embodiment of the invention, the network management agent references a list of network components (e.g., network resource and association file 200, shown in FIG. 2). The network management agent may then populate a virtual map (e.g., in memory) to correspond to the network to be configured from the referenced list of network components, based on the received description of a network to be configured.

Referring to process block 830, in an embodiment of the invention, the network management agent creates a snapshot of the configured network. The created snapshot includes one or more selected network components, in an embodiment of the invention. In an embodiment of the invention, the snapshot file provided by process block 830 contains specific subnet information, topology information, and network node information as illustrated in FIG. 3. The description provided in process 830 is a snapshot of the network to be configured including the selected network elements, in an embodiment of the invention (e.g., current network state snapshot 300, shown in FIG. 3).

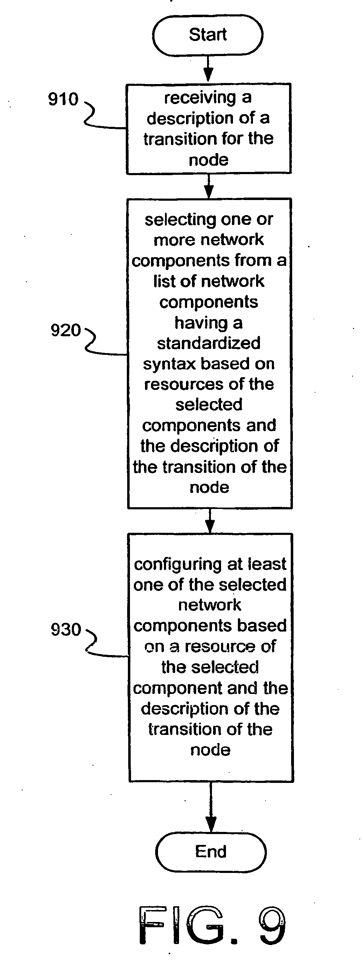

FIG. 9 is a flow diagram illustrating certain aspects of a method for automatically transitioning a node, according to an embodiment of the invention. Referring to process block 910, a network management agent receives a description of a transition for the node. Transitioning a node broadly refers to, for example, transitioning a node from a first network interface to a second interface, and/or from a first subnet to a second subnet, and/or from a first VLAN to a second VLAN, and/or from a first topology to a second topology.

In an embodiment of the invention, the received description has a standardized syntax. The received description may be human-readable when displayed on an output device (e.g., a display screen or a printer). The received description may be generated in a number of different ways. For example, the received description may be randomly generated in the control layer and passed to a function in the network management layer to initiate the transition. Also, the received description may be provided by a user (e.g., a system administrator) who wants to initiate a specified node transition.

Transitioning a node typically requires configuring the resources of one or more network components. Referring to process block 920, the network management agent selects a network component, from a list of network components, to support the node transition described in process block 910. In an embodiment of the invention, the list of network components has a standardized syntax (e.g., the network snapshot file shown in FIG. 3). The determination of which network components to select may be specified by the control layer (and/or a user) in a function call.

In an embodiment of the invention, selecting a network element may include referencing the list of network components to identify resources that are available within a network. The network management agent may create a virtual map of an existing network based on the referenced list of network components. The network management agent may then compare the received description of the node transition with the virtual map of the existing network and select appropriate resources to support the node transition (e.g., a VLAN switch, and/or an access point, and/or a power on/off module). In an embodiment of the invention, the network management agent then populates another virtual map that corresponds to the network after the node transition with the selected resources.

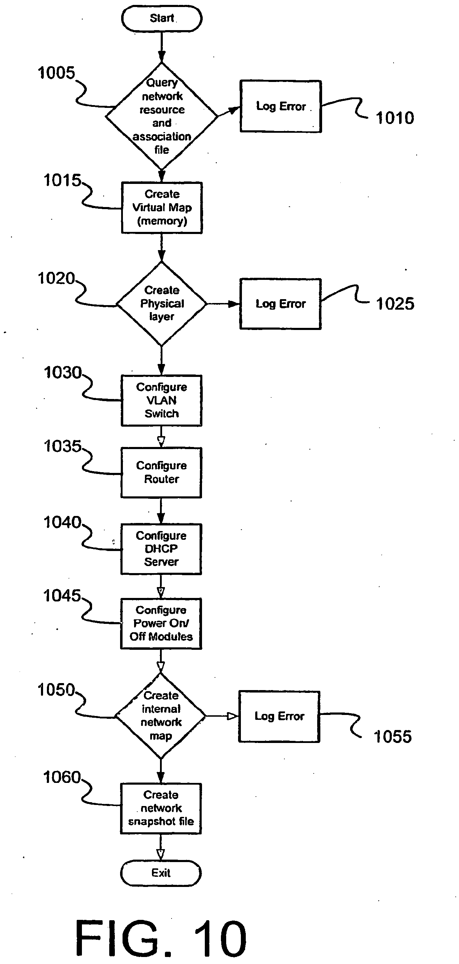

Referring to process block 930, the selected network components are configured to support the described node transition. The configuration of the selected network components may be based on resources of the selected network component and the received description of the node transition. For example, configuring a VLAN switch may include associating the node to be transitioned with a VLAN of the VLAN switch. The configuration of network components is further described below with regards to FIG. 10.

FIG. 10 is a flow diagram illustrating selected aspects of a method for configuring a network, according to an embodiment of the invention. Referring to process block 1005, the network management agent may query a list of available network components. In an embodiment of the invention, the network management agent may execute this query, for example, in response to receiving a network configuration request (as illustrated in FIG. 5). In an embodiment of the invention, the queried list has a standardized syntax and is called the network resource and association file (e.g., network resource and association file 200, shown in FIG. 2). Process block 1010 illustrates that the network management agent logs an error if it is unable to query the network resource and association file.

Referring to process block 1015, the network management agent reads and parses the available resources listed in the network resource and association file. The network management agent creates a virtual map of available network components and the associations between the available network components. The virtual map is created in volatile memory (e.g., random access memory), in an embodiment of the invention.

Referring to process block 1020, the network management agent creates a logical map of the network to be configured. In an embodiment of the invention the logical map of the network to be configured is created using selected resources from the network resource and association file (or the virtual map of process block 1015). The selection of resources is based, in part, on a standardized request for a particular network configuration (as shown in FIG. 5). Which resources are selected is also determined, at least in part, on which resources are available within the network (e.g., as listed in the network resource and association file or are present in the virtual map of process block 1015). Process block 1025 illustrates that an error may be logged if any of the requested network resources are not available.

Referring to process blocks 1030, 1035, 1040, and 1045 a number of selected network elements are configured. The configuration of the selected network elements is based, in part, on the requested network configuration and, in part, on the available resources of the selected network elements. The configuration of network elements shown in FIG. 10 is similar to the configuration of network elements described above with regards to FIG. 9.

Referring to process block 1030, a VLAN switch is configured, in an embodiment of the invention. Configuring a VLAN switch broadly refers to associating one or more VLAN switch ports with a particular VLAN (in effect associating every network component connected to the ports with a particular VLAN). The connections between VLAN switch ports and network components may be specified in an electronic file. In an embodiment of the invention, a software agent programmatically sets, configures, and/or reconfigures the VLAN switch by interacting with the VLAN switch to alter its state. A person of ordinary skill the art appreciates that the type of interaction used to alter the state of a network component depends on the particular network component.

Referring to process block 1035, a router is configured. A router may provide a number of network interfaces, in an embodiment of the invention. Each network interface may be associated with IP address information (e.g., interface IP address and subnet) to enable the exchange of packets with the interface. The IP address information for each interface may be specified by an electronic file(s). Configuring the router broadly refers to, *inter alia,* programmatically setting, configuring, and/or reconfiguring the one or more network interfaces of the router by interacting with router to alter its state. A person of ordinary skill the art appreciates that the type of interaction used to alter the state of a network component depends on the particular network component.

Referring to process block 1040, a DHCP server is configured. In an embodiment of the invention, a DHCP server provides network administrative functions (e.g., providing IP address information to nodes within the network). The DHCP server may associate one or more network interfaces with corresponding IP address information (e.g., IP address, subnet mask, and gateway). The associations between network interfaces and corresponding IP address information determine which nodes receive which network administrative functions. In an embodiment of the invention, the associations between network interfaces and corresponding IP address information is contained in an electronic file. Configuring the DHCP server broadly refers to, *inter alia,* programmatically setting, configuring, and/or reconfiguring the DHCP server by interacting with the DHCP server to alter its state. A person of ordinary skill the art appreciates that the type of interaction used to alter the state of a network component depends on the particular network component.

Referring to process block 1045, a power on/off module is configured. In an embodiment of the invention, power on/off modules may be associated with network components (e.g., hubs and access points). Configuring the power on/off modules broadly refers to, *inter alia,* programmatically powering on or off the power on/off modules by interacting with the power on/off modules to alter their state. A person of ordinary skill the art appreciates that the type of interaction used to alter the state of a network component depends on the particular network component.

Referring to process block 1050, the network management agent creates an internal file that provides detailed information about the configured network. This internal file may be used, for example, to specify which network components are associated with the configured so that those devices may be transitioned, if necessary. In an embodiment of the invention, a network state snapshot file (e.g., current network state snapshot 300, shown in FIG. 3) may be provided in process block 1060.

FIG. 11 is a flow diagram illustrating selected aspects of a method for network transition, according to an embodiment of the invention. Referring to process block 1105, the network management agent queries a list of available network components (e.g., the internal network map created in process block 1050 and/or process block 1140). In an embodiment of the invention, the network management agent may execute this query, for example, in response to receiving a request to transition one or more nodes. A request to transition one or more nodes often follows the network configuration process described above with respect to FIG. 10. The transition request may be performed by calling a function, in an embodiment of the invention. Transitioning one or more nodes may be automatically performed following the network configuration process, in an embodiment of the invention. The network management agent may log an error if it is unable to query the network resource and association file, as shown by process block 1110.

Referring to process block 1115, the network management agent reads and parses the available resources (e.g., the internal network map created in process block 1050 and/or process block 1140). The network management agent, in an embodiment of the invention, creates a virtual map of available network components and the network configuration. The virtual map may be created, for example, in volatile memory (e.g., random access memory).

Referring to process block 1120, the network management agent creates a logical map of a network to be transitioned. In an embodiment of the invention, the logical map of the network to be transitioned is created using selected resources from the virtual map of process block 1115. The selection of resources may be based, in part, on a request for a particular network transition on a specific network node. The selection of resources may also be based, at least in part, on which resources are available within the network (e.g., present in the virtual map of process block 1115). Process block 1125 illustrates that an error may be logged if any of the requested network resources are not available.

Referring to process block 1130, a VLAN switch is configured. In an embodiment of the invention, the network management agent programmatically configures a VLAN switch to include a node that is being transitioned in a VLAN associated with the VLAN switch. For example, the network management agent may call a function to interact with the VLAN switch and change its state so that a node is associated with a specified VLAN of the VLAN switch.

One or more power on/off modules may be configured as shown in process block 1135. The power on/off modules are used to interrupt the links that connect the nodes to be transitioned with the network, in an embodiment of the invention. The network management agent may then provide updated configuration information to the nodes to be transitioned responsive to a request from the nodes for configuration information. The power on/off modules may be programmatically configured, for example, by calling a function to interact with the power on/off modules and change their state, in an embodiment of the invention.

Referring to process block 1140, the network management agent may create an internal file that provides detailed information about the transitioned network. Also, the network management agent may create the network snapshot file of process block 1150, in an embodiment of the invention.

FIG. 12 is a flow diagram illustrating selected aspects of a method for controlling network configuration and transition according to an embodiment of the invention. A control agent, according to an embodiment, running on a control node may execute the process illustrated in FIG. 12. In an alternative embodiment of the invention, the control agent may be distributed over two or more network components. In some embodiments of the invention, the control agent may reside on the same network component as the network management agent while in alternative embodiments of the invention, the control agent and the network management agent may reside on separate network components. For example, the control agent may reside on a network control node and the network management agent may reside on a DHCP server, in an embodiment of the invention.

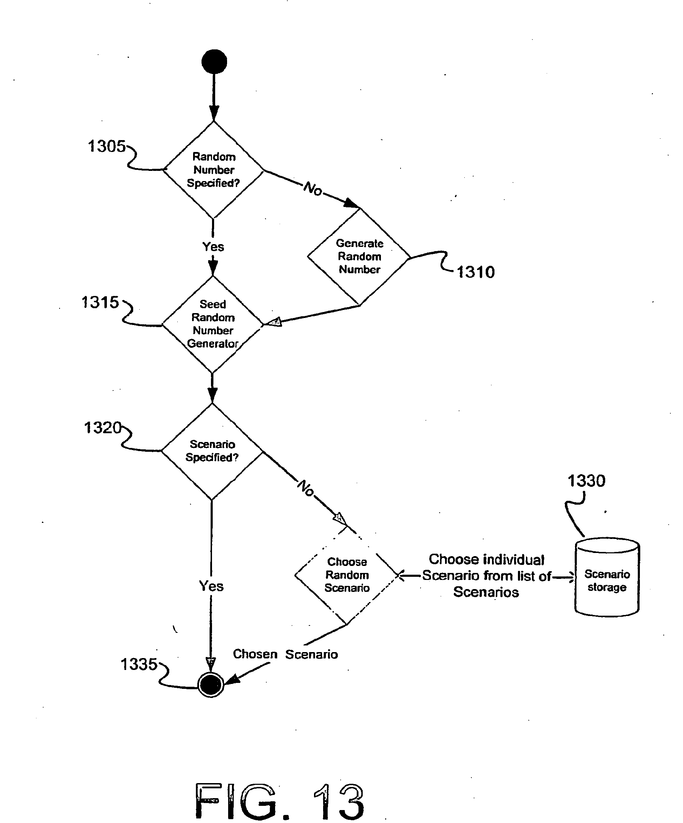

The control agent initiates network configurations and network transitions, in an embodiment of the invention. The control agent may generate network scenarios and automatically initiate network configurations and network transitions based on the generated network scenarios. As will be further described below with regard to FIG. 13, the network scenarios may be either randomly generated or based on predefined network configurations. The control agent manages these configurations as well as subsets and expansions of network configurations.

Referring to process block 1205, a user provides information to initiate a method for controlling a network scenario. In the illustrated embodiment, the user provides a running time and, optionally, a random number. The running time specifies a length of time that a network scenario or a series of network scenarios is allowed to run. The random number may be used to select a network scenario.

The control agent determines whether a random number has been specified in process block 1210. If a random number has not been specified, the control agent generates a random number in process block 1215. Generating a random number to specify a network scenario is further described below with regards to FIG. 13.

Referring to process block 1220, the control agent initiates an interface with the network management agent. The control agent directs the network management agent during the network scenario, network configuration, and/or network transition processes. In the illustrated embodiment of the invention, the control agent initiates the network scenario process by opening an interface with the network management agent.

The control agent references a runtime clock to determine whether the specified duration of the runtime has expired at process block 1225. If the specified duration of the runtime has expired, the control agent exits the method at process block 1230. Otherwise, the control agent selects a network scenario at process block 1235. The selected network scenario may be provided by a user or selected from a database of network scenarios. If the network scenario is selected from a database of network scenarios, the selection may be made by a user (e.g., a system administrator) or randomly selected by the control agent. Random selection of a network scenario is further described below with regard to FIG. 13.

The control agent may direct a network management agent to determine whether an existing network configuration can support the selected network scenario as illustrated in process block 1240. In an alternative embodiment of the invention, the functions of the control agent and the network management agent are performed by the same agent. The network management agent references a list of network components and their associations (e.g., the network resource and association file) to determine whether the existing network configuration supports the selected scenario. Whether an existing network supports a network scenario is based, at least in part, on whether the network scenario can be executed on the network without having to first configure the network.

Referring to process block 1245 the control agent generates a network configuration request, to reconfigure the network, if the existing network does not support the requested scenario. The network configuration request may be sent to the network management agent after being copied to a server as shown by reference numerals 1255 and 1250 respectively.

Referring to process block 1260, the network management agent verifies the network. The network management agent may use a wide variety of network validation and verification tools to verify the network. For example, the network management agent may ping one or more network elements to verify that they are reachable. The network management agent may log an error, as shown by process block 1265, if an error is detected while verifying the network.

The network management layer determines whether or not the network is valid at process block 1270. If the verification agent indicates that the network is not valid, the control agent performs a graceful recovery at process block 1275. Alternatively, if the verification agent indicates that the network is valid, the network management agent may execute a network transition at process block 1280. Network transitions are more fully described above with respect to FIG. 11.

The network management agent verifies the network transition at process block 1285. If an error is detected, the network management agent logs the error at process block 1290. The control agent may check the runtime clock to determine whether the allotted amount of time has expired at process block 1225. In an embodiment of the invention, the control layer may automatically select another network scenario for execution if the allotted amount of time has not expired.

FIG. 13 is a flow diagram illustrating selected aspects of a method for randomly generating a network scenario, according to an embodiment of the invention. A random number generator refers to an algorithm that receives as an input a number (referred to as a seed) and provides as an output a random (or pseudo-random) series of numbers. The control agent determines whether a user has specified a seed at process block 1305. If the user has not specified a seed, the control agent generates a seed at process block 1310.

Referring to process block 1315, the control agent seeds the random number generator using the seed obtained at either process block 1305 or 1310. Random number generators are well known to those of ordinary skill in the art and will not be further described expect as to how they relate to embodiments of the invention. If the random seed has been previously used, the network scenario will be automatically generated and then that network scenario is selected at process block 1335. Otherwise, the control agent randomly selects a network scenario based on the random number provided at process block 1315. In an embodiment of the invention, the control agent randomly selects the network scenario from the database of network scenarios shown by reference numeral 1330. The selected network scenario is provided to the control agent at reference numeral 1335.

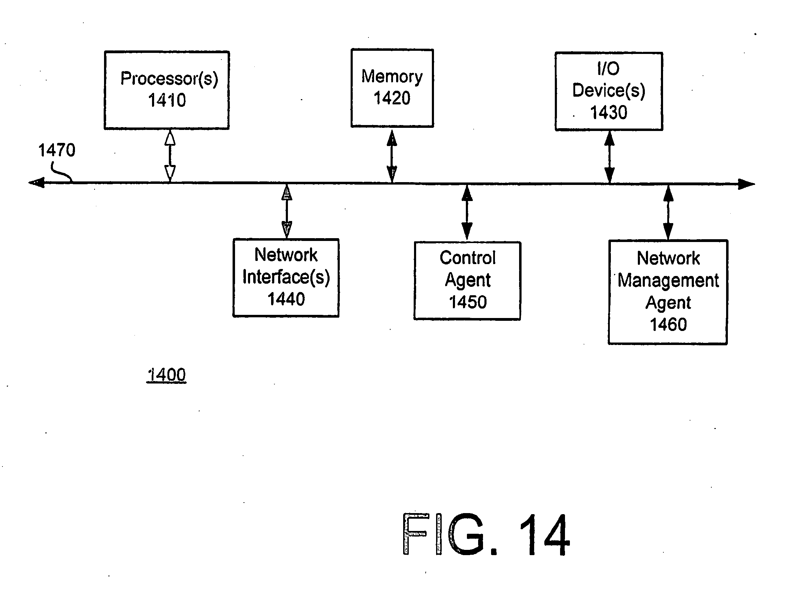

FIG. 14 is a simplified block diagram of selected elements of exemplary node 1400, implemented according to an embodiment of the invention. Node 1400 may include: one or more processor(s) 1410, memory 1420, one or more Input/Output interfaces 1430, network interface(s) 1440, control agent 1450, network management agent 1460. The illustrated elements may be connected together through system interconnect 1470. Processor(s) 1410 may include a microprocessor, microcontroller, field programmable gate array (FPGA), application specific integrated circuit (ASIC), central processing unit (CPU), programmable logic device (PLD), and similar devices that access instructions from system storage (e.g., memory 1420), decode them, and execute those instructions by performing arithmetic and logical operations. In some embodiments of the invention, processor(s) 1420 is implemented with a plurality of processors.

Memory 1420 may encompass a wide variety of memory devices including read-only memory (ROM), erasable programmable read-only memory (EPROM), electrically erasable programmable read-only memory (EEPROM), random access memory (RAM), non-volatile random access memory (NVRAM), cache memory, flash memory, and other memory devices. Memory 1420 may also include one or more hard disks, floppy disks, ZIP disks, compact disks (e.g., CD-ROM), digital versatile/video disks (DVD), magnetic random access memory (MRAM) devices, and other system-readable media that store instructions and/or data. Memory 1420 may store program modules such as routines, programs, objects, images, data structures, program data, and other program modules that perform particular tasks or implement particular abstract data types that facilitate system use.

One or more I/O interfaces 1430 may include a hard disk drive interface, a magnetic disk drive interface, an optical drive interface, a parallel port, serial controller or super I/O controller, serial port, universal serial bus (USB) port, a display device interface (e.g., video adapter), a sound card, modem, and the like.

Network interface(s) 1440 may include a wide variety of software, hardware, and/or firmware to interface node 1400 with an associated network (not shown). In an embodiment of the invention, network interface 1440 includes both wired (e.g., local area network) interfaces and wireless (e.g., wireless local area network) interfaces. Network interface(s) 1440 may include network interface card(s) and/or chipsets that provide a network interface.

Control agent 1450 enables node 1400 to act as a single control point for a network to which node 1400 is connected. Control agent 1450 may be executable content, control logic (e.g., ASIC, PLD, FPGA, etc.), firmware, or some combination thereof, in an embodiment of the invention. In embodiments of the invention in which control agent 1450 is executable content, it may be stored in memory 1420 and executed by processor(s) 1410.

Network management agent 1460 enables node 1400 to perform network configuration changes and network transitions, in an embodiment of the invention. Network management agent 1460 may be executable content, control logic (e.g., ASIC, PLD, FPGA, etc.), firmware, or some combination thereof, in an embodiment of the invention. In embodiments of the invention in which network management agent 1460 is executable content, it may be stored in memory 1420 and executed by processor(s) 1410. In the illustrated embodiment of the invention, network management agent 1460 resides on the same node as control agent 1450. In alternative embodiments of the invention, control agent 1450 and network management agent 1460 reside on separate nodes. In yet other alternative embodiments of the invention, control agent 1450 and/or network management agent 1460 are distributed across more than one node.

System interconnect 1470 permits communication between the various elements of node 1470. System interconnect 1470 may include a wide variety of signal lines including one or more of a memory bus, peripheral bus, local bus, host bus, bridge, optical, electrical, acoustical, and other propagated signal lines.

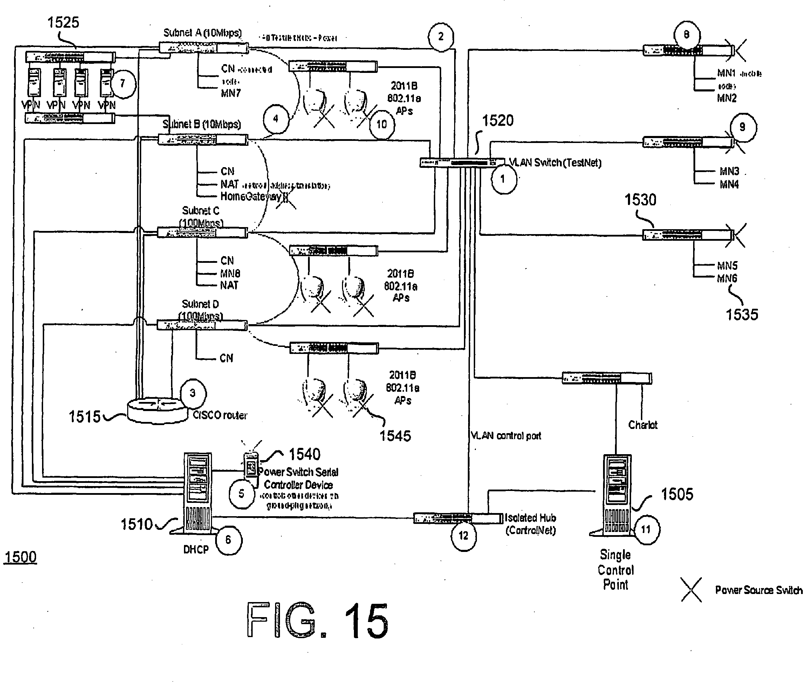

FIG. 15 is a block diagram of selected elements of exemplary network 1500, implemented according to an embodiment of the invention. Network 1500 includes control node 1505, DHCP server 1510, router 1515, VLAN switch 1520, VPN 1525, hub 1530, and node 1535, power switch serial controller device 1540, and access point 1545.

Control node 1505 provides a single control point for executing network configurations, network transitions, and/or network scenarios, in an embodiment of the invention. A control agent (e.g., control agent 1450) resides on control node 1505 in an embodiment of the invention. In alternative embodiments of the invention, a control agent and a network management agent (e.g., network management agent 1440) reside on control node 1505. Control node 1505 may be a general purpose computing device containing a control agent, in an embodiment of the invention.

DHCP server 1510 provides network administrative functions in an embodiment of the invention. For example, DHCP server 1510 may provide IP addresses, subnet masks, and/or gateway information to network components of network 1500. The DHCP server may associate one or more network interfaces with corresponding IP address information (e.g., IP address, subnet mask, and gateway). The associations between network interfaces and corresponding IP address information determine which nodes receive which network administrative functions, in an embodiment of the invention. DHCP servers are well known to those of ordinary skill in the art and will not be further described except as to how they relate to embodiments of the invention. In an embodiment of the invention a network management agent resides on DHCP server 1510. In such an embodiment of the invention, DHCP server 1510 may be referred to as a network management node. The term network management node broadly refers to a node on which a network management agent (or a portion of a network management agent) resides.

Router 1515 provides a number of network interfaces in an embodiment of the invention. Each network interface may be associated with IP address information (e.g., interface IP address and subnet) to enable the exchange of packets with the interface. Routers are well known to those of ordinary skill in the art and will not further described except as to how they relate to embodiments of the invention.

VLAN switch 1520 provides a plurality of ports and supports a plurality of VLANs, in an embodiment of the invention. Each supported VLAN may include one or more ports. Each port may be connected to one or more network components. VLAN switch 1520 enables an embodiment of the invention to group hubs together programmatically into logical subnets. VLAN switches are well known to those of ordinary skill in the art and will not be further described except as to how they relate to embodiments of the invention.

VPN 1525 provides a mechanism for secure transactions in an embodiment of the invention. In some embodiments of the invention, one or VPNs employ static IP address configurations. In such embodiments of the invention, a network management agent may create the specific subnets used to communicate with the statically configured VPN. This may be accomplished, for example, by configuring the IP addresses on the DHCP server with the subnet IP addresses that correspond to the specific VPN. In addition, router 1515 may be configured to isolate network traffic on either side of the VPN so that only VPN traffic is routed. Internal traffic refers to traffic associated with the secure interface(s) of the VPN (or firewall) and external traffic refers to traffic associated with the non-secure interface(s) of the VPN (or firewall). VPNs and/or firewalls and/or similar devices are well known to those of ordinary skill in the art and will not be further described except as to how they relate to embodiments of the invention.

It should be appreciated that reference throughout this specification to "one embodiment" or "an embodiment" means that a particular feature, structure or characteristic described in connection with the embodiment is included in at least one embodiment of the present invention. Therefore, it is emphasized and should be appreciated that two or more references to "an embodiment" or "one embodiment" or "an alternative embodiment" in various portions of this specification are not necessarily all referring to the same embodiment.

Similarly, it should be appreciated that in the foregoing description of exemplary embodiments of the invention, various features of the invention are sometimes grouped together in a single embodiment, figure, or description thereof for the purpose of streamlining the disclosure aiding in the understanding of one or more of the various inventive aspects. The claims following the detailed description are expressly incorporated into this detailed description.

The disclosure of this application also includes the following numbered clauses:
1. A method for describing a network comprising:
   categorizing a subnet into a subnet grouping, wherein subnets within a subnet grouping can route to one another;
   providing a subnet subsection for the subnet within the categorized subnet grouping; and
   specifying a network topology type section in the provided subnet subsection.
2. The method of clause 1, wherein specifying the network topology type section for the established subnet subsection comprises:
   specifying that the subnet is to be supported by a topology that is compliant with the IEEE 802.3 standard.
3. The method of clause 1, wherein specifying the network topology type section for the established subnet subsection comprises:
   specifying that the subnet is to be supported by a topology that is compliant with the IEEE 802.11 a standard.
4. The method of clause 1, wherein specifying the network topology type section for the established subnet subsection comprises:
   specifying that the subnet is to be supported by a topology that is compliant with the IEEE 802.1 1b standard.
5. The method of clause 1, further comprising:
   providing a list of nodes, the list including at least one node.
6. The method of clause 5, wherein providing the list of nodes further comprises providing a starting position on the network for the listed node.
7. The method of clause 5, wherein providing the list of nodes comprises providing the list of nodes within the specified network topology type subsection.
8. The method of clause 1, wherein categorizing the subnet into a subnet grouping comprises categorizing the subnet into an internal subnet grouping or an external subnet grouping.
9. The method of clause 8, wherein categorizing the subnet into the internal subnet grouping or the external subnet grouping comprises:
   placing the subnet in the external subnet grouping, if the subnet is associated with an external interface of a Virtual Private Network (VPN); and
   placing the subnet in the internal subnet grouping, if subnet is associated with an internal interface of the VPN.
10. The method of clause 8, wherein categorizing the subnet into the internal subnet grouping or the external subnet grouping comprises:
   placing the subnet in the external subnet grouping, if the subnet is to be associated with a non-secure interface of a firewall; and
   placing the subnet in the internal subnet grouping, if the subnet is to be associated with a non-secure interface of a firewall.
11. A network comprising:
   a first network component to receive a request for a network configuration; and
   a second network component in electrical communication with the first network component to provide the request for the network configuration, the second network component having a processor and logic executable thereon to
   categorize a subnet into a subnet grouping, wherein subnets within a subnet grouping can route to one another
   provide a subnet subsection for the subnet within the categorized subnet grouping; and
   specify a network topology type subsection in the provided subnet subsection.
12. The network of clause 11, wherein the second network component having the processor and logic executable thereon further comprises logic executable thereon to:
   provide a list of nodes, the list including at least one node.
13. The network of clause 12, wherein to provide the list of nodes comprises to provide the list of nodes within the specified network topology type subsection.
14. The network of clause 11, wherein the first network component is a Dynamic Host configuration Protocol (DHCP) server.
15. The network of clause 11, wherein the second network component is a control node.
16. An article of manufacture comprising:
   an electronically accessible medium providing instructions that, when executed by an apparatus, cause the apparatus to
   categorize a subnet into a subnet grouping, wherein subnets within a subnet grouping can route to one another;
   provide a subnet subsection for the subnet within the categorized subnet grouping; and
   specify a network topology type subsection in the provided subnet subsection.
17. The article of manufacture of clause 16, wherein the electronically accessible medium further provides instructions that, when executed by an apparatus, cause the apparatus to:
   provide a list of nodes, the list to include at least one node.
18. The article of manufacture of clause 17, wherein the electronically accessible medium providing instructions, that, when executed by the apparatus, cause the apparatus to provide a list of nodes cause the apparatus to provide the list of nodes within the specified network topology type subsection.
19. The article of manufacture of clause 17, wherein the electronically accessible medium providing instructions that, when executed by the apparatus, cause the apparatus to provide the list of nodes, the list to include at least one node, cause the apparatus to provide a start position on the network for the listed node.
20. The article of manufacture of clause 17, wherein the electronically accessible medium providing instructions that, when executed by the apparatus, cause the apparatus to categorize the subnet into a subnet grouping, cause the apparatus to categorize the subnet into an internal subnet grouping or an external subnet grouping.
21. The article of manufacture of clause 16, wherein the electronically accessible medium providing instructions that, when executed by the apparatus, cause the apparatus to categorize the subnet into the internal subnet grouping or the external subnet grouping, cause the apparatus to:
   place the subnet in the external subnet grouping, if the subnet is associated with an external interface of a Virtual Private Network (VPN); and
   place the subnet in the internal subnet grouping, if subnet is associated with an internal interface of the VPN.
22. The article of manufacture of clause 16, wherein the electronically accessible medium providing instructions that, when executed by the apparatus, cause the apparatus to categorize the subnet into the internal subnet grouping or the external subnet grouping, cause the apparatus to:
   place the subnet in the external subnet grouping, if the subnet is associated with a non-secure interface of a firewall; and
   place the subnet in the internal subnet grouping, if the subnet is associated with a secure interface of a firewall.
23. A network comprising:
   a first network component to receive a description of a configured network; and
   a second network component in electrical communication with the first network component to provide the description of the configured network, the second network component having a processor and logic executable thereon to
   categorize a subnet into a subnet grouping, wherein subnets within a subnet grouping can route to one another;
   provide a subnet subsection for the subnet within the categorized subnet grouping;
   specify a network topology type subsection in the provided subnet subsection; and
   provide a list of nodes within the specified network topology type subsection.
24. The network of clause 23, wherein the first network component is a control node.
25. The network of clause 23, wherein the second network component is a Dynamic Host Configuration (DHCP) server.

## Claims

1. A method for transitioning a node from one subnet to another subnet, the method comprising:
describing a network in a standardised syntax by:
categorizing (710) a subnet into a subnet grouping based, at least in part, on whether the subnet is associated with a non-secure interface of a firewall or a secure interface of a firewall, wherein subnets within a subnet grouping can route to one another;
providing (720) a subnet subsection for the subnet within the categorized subnet grouping; and
specifying (730) a network topology type section in the provided subnet subsection,
**characterised by** further comprising:
receiving (910) a description of a transition for the node, wherein the description is based in terms of the standardised syntax;
selecting (920) one or more network components from a list of network components to support the received described node transition; and
configuring (930) at least one of the selected network components based on a resource of the selected component and the description of the transition of the node.

2. The method of claim 1, wherein specifying (730) the network topology type section for the established subnet subsection comprises:
specifying that the subnet is to be supported by a topology that is compliant with the IEEE 802.3 standard.

3. The method of claim 1, wherein specifying (730) the network topology type section for the established subnet subsection comprises:
specifying that the subnet is to be supported by a topology that is compliant with the IEEE 802.11 a standard.

4. The method of claim 1, wherein specifying (730) the network topology type section for the established subnet subsection comprises:
specifying that the subnet is to be supported by a topology that is compliant with the IEEE 802.lib standard.

5. The method of claim 1, further comprising:
providing (740) a list of nodes, the list including at least one node.

6. The method of claim 5, wherein providing (740) the list of nodes further comprises providing a starting position on the network for the listed node.

7. The method of claim 5, wherein providing (740) the list of nodes comprises providing the list of nodes within the specified network topology type subsection.

8. The method of claim 1, wherein a received description is human-readable when displayed on an output device.

9. The method of claim 1, wherein a received description is randomly generated in a control layer and passed to a function in a network management layer to initiate a transition.

10. The method of claim 1, wherein a received description is provided by a user to initiate a specified node transition.

11. The method of claim 1, wherein selecting a network element includes referencing the list of network components to identify resources that are available within a network.

12. The method of claim 11, further comprising creating a virtual map of an existing network based on a referenced list of network components;
comparing a received description of the node transition with the virtual map of the existing network; and
selecting appropriate resources to support the node transition.

13. The method of claim 12, further comprising the population of another virtual map that corresponds to the network after the node transition with the selected resources.

14. A network comprising:
a first network component to receive a request for a network configuration in a standardised syntax; and
a second network component in electrical communication with the first network component to provide the request for the network configuration, the second network component having a processor and logic executable thereon to
categorize (710) a subnet into a subnet grouping based, at least in part, on whether the subnet is associated with a non-secure interface of a firewall or a secure interface of a firewall, wherein subnets within a subnet grouping can route to one another;
providing (720) a subnet subsection for the subnet within the categorized subnet grouping; and
specifying (730) a network topology type section in the provided subnet subsection,
further comprising;
receiving (910) a description of a transition for the node, wherein the description is based in terms of the standardised syntax;
selecting (920) one or more network components from a list of network components to support the received described node transition; and
configuring (930) at least one of the selected network components based on a resource of the selected component and the description of the transition of the node.

15. The network of claim 14, wherein the second network component having the processor and logic executable thereon further comprises logic executable thereon to:
provide (740) a list of nodes, the list including at least one node.

16. The network of claim 15, wherein to provide (740) the list of nodes comprises to provide the list of nodes within the specified network topology type subsection.

17. The network of claim 14, wherein the first network component is a Dynamic Host configuration Protocol (DHCP) server.

18. The network of claim 14, wherein the second network component is a control node.

19. An article of manufacture comprising:
an electronically accessible medium providing instructions that, when executed by an apparatus, cause the apparatus to
categorize (710) a subnet into a subnet grouping based, at least in part, on whether the subnet is associated with a non-secure interface of a firewall or a secure interface of a firewall, wherein subnets within a subnet grouping can route to one another;
provide (720) a subnet subsection for the subnet within the categorized subnet grouping; and
specify (730) a network topology type subsection in the provided subnet subsection,
further comprising;
receiving (910) a description of a transition for the node, wherein the description is based in terms of the syntax of the described network;
selecting (920) one or more network components from a list of network components to support the received described node transition; and
configuring (930) at least one of the selected network components based on a resource of the selected component and the description of the transition of the node.

20. The article of manufacture of claim 19, wherein the electronically accessible medium further provides instructions that, when executed by an apparatus, cause the apparatus to:
provide (740) a list of nodes, the list to include at least one node.

21. The article of manufacture of claim 20, wherein the electronically accessible medium providing instructions that, when executed by the apparatus, cause the apparatus to provide the list of nodes within the specified network topology type subsection.

22. The article of manufacture of claim 20, wherein the electronically accessible medium providing instructions that, when executed by the apparatus, cause the apparatus to provide (740) the list of nodes, the list to include at least one node, cause the apparatus to provide a start position on the network for the listed node.

23. The article of manufacture of claim 20, wherein the electronically accessible medium providing instructions that, when executed by the apparatus, cause the apparatus to categorize (710) the subnet into a subnet grouping, cause the apparatus to categorize the subnet into a subnet group that is associated with a non-secure interface of a firewall subnet grouping or a secure interface of a firewall subnet grouping.

24. The article of manufacture of claim 19, wherein the electronically accessible medium providing instructions that, when executed by the apparatus, cause the apparatus to categorize (710) the subnet into the non-secure interface of a firewall subnet grouping or the secure interface of a firewall subnet grouping, cause the apparatus to:
place the subnet in the non-secure interface of a firewall subnet grouping, if the subnet is associated with an external interface of a Virtual Private Network (VPN); and
place the subnet in the secure interface of a firewall subnet grouping, if subnet is associated with an internal interface of the VPN.

## Patentansprüche

1. Verfahren zum Überführen eines Knotens aus einem Teilnetz in ein anderes Teilnetz, wobei
ein Netzwerk in einer Standardsyntax beschrieben wird, indem:
ein Teilnetz in eine Teilnetzgruppe mindestens teilweise in Abhängigkeit davon kategorisiert wird (710), ob das Teilnetz einer nicht-sicheren oder einer sicheren Schnittstelle einer Firewall zugeordnet ist, wobei Teilnetze innerhalb einer Teilnetzgruppe einander zuleiten können,
ein Teilnetz-Unterabschnitt für das Teilnetz innerhalb der kategorisierten Teilnetzgruppe bereitgestellt wird (720), und
in dem bereitgestellten Teilnetz-Unterabschnitt ein Abschnitt des Netzwerk-Topologietyps spezifiziert wird (730),
**dadurch gekennzeichnet, dass** ferner
eine Beschreibung einer Überführung für den Knoten empfangen wird (910), wobei die Beschreibung auf der standardisierten Syntax beruht,
aus einer Liste von Netzwerkkomponenten eine oder mehrere Netzwerkkomponenten zur Unterstützung der empfangenen beschriebenen Knotenüberführung ausgewählt werden (920), und
mindestens eine der ausgewählten Netzwerkkomponenten aufgrund einer Ressource der ausgewählten Komponente und der Beschreibung der Knotenüberführung konfiguriert wird (930).

2. Verfahren nach Anspruch 1, wobei zum Spezifizieren (730) des Abschnitts des Netzwerk-Topologietyps für den erstellten Teilnetz-Unterabschnitt spezifiziert wird, dass das Teilnetz durch eine mit dem Standard IEEE 802.3 verträgliche Topologie zu unterstützen ist.

3. Verfahren nach Anspruch 1, wobei zum Spezifizieren (730) des Abschnitts des Netzwerk-Topologietyps für den erstellten Teilnetz-Unterabschnitt spezifiziert wird, dass das Teilnetz durch eine mit dem Standard IEEE 802.11 verträgliche Topologie zu unterstützen ist.

4. Verfahren nach Anspruch 1, wobei zum Spezifizieren (730) des Abschnitts des Netzwerk-Topologietyps für den erstellten Teilnetz-Unterabschnitt spezifiziert wird, dass das Teilnetz durch eine mit dem Standard IEEE 802.1 ib verträgliche Topologie zu unterstützen ist.

5. Verfahren nach Anspruch 1, wobei ferner eine Knotenliste mit mindestens einem Knoten bereitgestellt wird (740).

6. Verfahren nach Anspruch 5, wobei beim Bereitstellen (740) der Knotenliste eine Startposition in dem Netzwerk für den aufgelisteten Knoten bereitgestellt wird.

7. Verfahren nach Anspruch 5, wobei beim Bereitstellen (740) der Knotenliste diese innerhalb des spezifizierten Unterabschnitts des Netzwerk-Topologietyps bereitgestellt wird.

8. Verfahren nach Anspruch 1, wobei eine empfangene Beschreibung bei Darstellung auf einem Ausgabegerät vom Menschen lesbar ist.

9. Verfahren nach Anspruch 1, wobei eine empfangene Beschreibung in einer Steuerebene zufallsmäßig generiert und an eine Funktion in einer Netzwerk-Verwaltungsebene zur Einleitung einer Überführung weitergegeben wird.

10. Verfahren nach Anspruch 1, wobei eine empfangene Beschreibung vom Benutzer zur Einleitung einer spezifizierten Knotenüberführung bereitgestellt wird.

11. Verfahren nach Anspruch 1, wobei zum Auswählen eines Netzwerkelements auf die Liste von Netzwerkkomponenten Bezug genommen wird, um in einem Netzwerk verfügbare Ressourcen zu identifizieren.

12. Verfahren nach Anspruch 11, wobei ferner
ein virtuelles Abbild eines existierenden Netzwerks aufgrund einer in Bezug genommenen Liste von Netzwerkkomponenten erzeugt wird,
eine empfangene Beschreibung der Knotenüberführung mit dem virtuellen Abbild des existierenden Netzwerks verglichen wird und
geeignete Ressourcen zur Unterstützung der Knotenüberführung ausgewählt werden.

13. Verfahren nach Anspruch 12, wobei ferner ein weiteres virtuelles Abbild populiert wird, das dem Netzwerk nach der Knotenüberführung mit den ausgewählten Ressourcen entspricht.

14. Netzwerk mit
einer ersten Netzwerkkomponente zum Empfangen einer Aufforderung für eine Netzwerkkonfiguration in einer standardisierten Syntax, und
einer zweiten Netzwerkkomponente in elektrischer Verbindung mit der ersten Netzwerkkomponente zum Erzeugen der Aufforderung zur Netzwerkkonfiguration, wobei die zweite Netzwerkkomponente einen Prozessor und auf diesem eine ausführbare Logik aufweist, um:
ein Teilnetz in eine Teilnetzgruppe mindestens teilweise in Abhängigkeit davon zu kategorisieren (710), ob das Teilnetz einer nicht-sicheren oder einer sicheren Schnittstelle einer Firewall zugeordnet ist, wobei Teilnetze innerhalb einer Teilnetzgruppe einander zuleiten können,
einen Teilnetz-Unterabschnitt für das Teilnetz innerhalb der kategorisierten Teilnetzgruppe bereitzustellen (720), und
in dem bereitgestellten Teilnetz-Unterabschnitt einen Abschnitt des Netzwerk-Topologietyps zu spezifizieren (730),
wobei ferner;
eine Beschreibung einer Überführung für den Knoten empfangen wird (910), wobei die Beschreibung auf der standardisierten Syntax beruht,
aus einer Liste von Netzwerkkomponenten eine oder mehrere Netzwerkkomponenten zur Unterstützung der empfangenen beschriebenen Knotenüberführung ausgewählt werden (920), und
mindestens eine der ausgewählten Netzwerkkomponenten aufgrund einer Ressource der ausgewählten Komponente und der Beschreibung der Knotenüberführung konfiguriert wird (930).

15. Netzwerk nach Anspruch 14, wobei die zweite Netzwerkkomponente mit dem Prozessor und der darin vorhandenen ausführbaren Logik ferner eine in dem Prozessor vorhandene ausführbare Logik aufweist, um eine Knotenliste mit mindestens einem Knoten zu erzeugen (740).

16. Netzwerk nach Anspruch 15, wobei zum Bereitstellen (740) der Knotenliste das Bereitstellen der Knotenliste innerhalb des spezifizierten Unterabschnitts des Netzwerk-Topologietyps gehört.

17. Netzwerk nach Anspruch 14, wobei die erste Netzwerkkomponente ein DHCP-Server (Server mit dynamischem Host-Configuration-Protocol) ist.

18. Netzwerk nach Anspruch 14, wobei die zweite Netzwerkkomponente ein Steuerknoten ist.

19. Herstellbarer Gegenstand mit
einem elektronisch zugänglichen Medium zum Bereitstellen von Befehlen, die bei Ausführung mittels eines Geräts bewirken, dass das Gerät:
ein Teilnetz in eine Teilnetzgruppe mindestens teilweise in Abhängigkeit davon kategorisiert (710), ob das Teilnetz einer nicht-sicheren oder einer sicheren Schnittstelle einer Firewall zugeordnet ist, wobei Teilnetze innerhalb einer Teilnetzgruppe einander zuleiten können,
einen Teilnetz-Unterabschnitt für das Teilnetz innerhalb der kategorisierten Teilnetzgruppe bereitstellt (720), und
in dem bereitgestellten Teilnetz-Unterabschnitt einen Abschnitt des Netzwerk-Topologietyps spezifiziert (730),
wobei ferner
eine Beschreibung einer Überführung für den Knoten empfangen wird (910), wobei die Beschreibung auf der standardisierten Syntax beruht,
aus einer Liste von Netzwerkkomponenten eine oder mehrere Netzwerkkomponenten zur Unterstützung der empfangenen beschriebenen Knotenüberführung ausgewählt werden (920), und
mindestens eine der ausgewählten Netzwerkkomponenten aufgrund einer Ressource der ausgewählten Komponente und der Beschreibung der Knotenüberführung konfiguriert wird (930).

20. Herstellbarer Gegenstand nach Anspruch 19, wobei das elektronisch zugängliche Medium ferner Befehle bereitstellt, die bei Ausführung auf einem Gerät bewirken, dass das Gerät eine Knotenliste mit mindestens einem Knoten bereitstellt (740).

21. Herstellbarer Gegenstand nach Anspruch 20, wobei das elektronisch zugängliche Medium Befehle bereitstellt, die bei Ausführung auf dem Gerät bewirken, dass das Gerät die Knotenliste innerhalb des spezifizierten Unterabschnitts des Netzwerk-Topologietyps bereitstellt (740).

22. Herstellbarer Gegenstand nach Anspruch 20, wobei das elektronisch zugängliche Medium Befehle bereitstellt, die bei Ausführung auf dem Gerät bewirken, dass das Gerät die Knotenliste mit mindestens einem Knoten bereitstellt (740) und dass das Gerät eine Startposition in dem Netzwerk für den aufgelisteten Knoten bereitstellt.

23. Herstellbarer Gegenstand nach Anspruch 20, wobei das elektronisch zugängliche Medium Befehle bereitstellt, die bei Ausführung auf dem Gerät bewirken, dass das Gerät das Teilnetz in eine Teilnetzgruppe kategorisiert (710) und dass das Gerät das Teilnetz in einer Teilnetzgruppe kategorisiert, die einer nicht-sicheren oder sicheren Schnittstelle einer Firewall-Teilnetzgruppe zugeordnet ist.

24. Herstellbarer Gegenstand nach Anspruch 19, wobei das elektronisch zugängliche Medium Befehle bereitstellt, die bei Ausführung auf dem Gerät bewirken, dass das Gerät das Teilnetz in eine nicht-sichere oder sichere Schnittstelle eines Firewall-Teilnetzes kategorisiert und dass das Gerät:
das Teilnetz in die nicht-sichere Schnittstelle einer Firewall-Teilnetzgruppe stellt, falls das Teilnetz der externen Schnittstelle eines virtuellen Privatnetzes (VPN) zugeordnet ist, und
das Teilnetz in die sichere Schnittstelle einer Firewall-Teilnetzgruppe stellt, falls das Teilnetz einer internen Schnittstelle des VPN zugeordnet ist.

## Revendications

1. Procédé pour soumettre un noeud à une transition d'un sous-réseau à un autre sous-réseau, le procédé consistant à :
décrire un réseau dans une syntaxe normalisée en :
catégorisant (710) un sous-réseau en un groupement de sous-réseaux sur la base, au moins en partie, du fait de savoir si le sous-réseau est associé à une interface non sécurisée d'un pare-feu ou à une interface sécurisée d'un pare-feu, dans lequel les sous-réseaux appartenant à un groupement de sous-réseaux peuvent conduire les uns vers les autres ;
fournissant (720) une sous-section d'un sous-réseau pour le sous-réseau appartenant au groupement de sous-réseaux catégorisé ; et
spécifiant (730) une section de type de topologie de réseau dans la sous-section de sous-réseau fournie,
**caractérisé par le fait qu'**il consiste en outre à :
recevoir (910) une description d'une transition pour le noeud, dans lequel la description a pour base des termes de la syntaxe normalisée ;
sélectionner (920) un ou plusieurs composants de réseau dans une liste de composants de réseau pour prendre en charge la transition de noeud décrite reçue ; et
configurer (930) au moins l'un des composants de réseau sélectionnés sur la base d'une ressource du composant sélectionné et de la description de la transition du noeud.

2. Procédé selon la revendication 1, dans lequel la spécification (730) de la section de type de topologie du réseau pour la sous-section de sous-réseau établie consiste à :
spécifier que le sous-réseau doit être pris en charge par une topologie qui est conforme à la norme IEEE 802.3.

3. Procédé selon la revendication 1, dans lequel la spécification (730) de la section de type de topologie du réseau pour la sous-section de sous-réseau établie consiste à :
spécifier que le sous-réseau doit être pris en charge par une topologie qui est conforme à la norme IEEE 802.11.

4. Procédé selon la revendication 1, dans lequel la spécification (730) de la section de type de topologie du réseau pour la sous-section de sous-réseau établie consiste à :
spécifier que le sous-réseau doit être pris en charge par une topologie qui est conforme à la norme IEEE 802.lib.

5. Procédé selon la revendication 1, consistant en outre à :
fournir (740) une liste de noeuds, la liste comprenant au moins un noeud.

6. Procédé selon la revendication 5, dans lequel la fourniture (740) de la liste de noeuds consiste en outre à fournir une position de départ sur le sous-réseau pour le noeud figurant dans la liste.

7. Procédé selon la revendication 5, dans lequel la fourniture (740) de la liste de noeuds consiste à fournir la liste de noeuds dans la sous-section spécifiée de type de topologie du réseau.

8. Procédé selon la revendication 1, dans lequel une description reçue est lisible par l'être humain lorsqu'elle est affichée sur un dispositif de sortie.

9. Procédé selon la revendication 1, dans lequel une description reçue est générée aléatoirement dans une couche de commande et est admise à passer vers une fonction se trouvant dans une couche de gestion de réseau pour déclencher une transition.

10. Procédé selon la revendication 1, dans lequel une description reçue est fournie par un utilisateur pour déclencher une transition de noeud spécifiée.

11. Procédé selon la revendication 1, dans lequel la sélection d'un élément de réseau consiste à référencer la liste de composants du réseau afin qu'elle identifie des ressources qui sont disponibles au sein d'un réseau.

12. Procédé selon la revendication 11, consistant en outre à créer une carte virtuelle d'un réseau existant sur la base d'une liste référencée de composants de réseau ;
comparer une description reçue de la transition de noeud avec la carte virtuelle du réseau existant ; et
sélectionner des ressources appropriées pour prendre en charge la transition du noeud.

13. Procédé selon la revendication 12, consistant en outre à peupler une autre carte virtuelle qui correspond au réseau après la transition du noeud avec les ressources sélectionnées.

14. Procédé comprenant :
un premier composant de réseau pour recevoir une demande de configuration d'un réseau dans une syntaxe normalisée ; et
un deuxième composant de réseau en communication électrique avec le premier composant de réseau pour fournir la demande de configuration du réseau, le deuxième composant de réseau ayant un processeur et un système logique pouvant s'exécuter sur ce dernier pour
catégoriser (710) un sous-réseau en un groupement de sous-réseaux sur la base, au moins en partie, du fait de savoir si le sous-réseau est associé à une interface non sécurisée d'un pare-feu ou à une interface sécurisée d'un pare-feu, dans lequel des sous-réseaux appartenant à un groupement de sous-réseaux peuvent conduire les uns vers les autres ;
fournir (720) une sous-section d'un sous-réseau pour le sous-réseau appartenant au groupement de sous-réseaux catégorisé ; et
spécifier (730) une section de type de topologie de réseau dans la sous-section de sous-réseau fournie,
consistant en outre à :
recevoir (910) une description d'une transition pour le noeud, la description ayant pour base des termes de la syntaxe normalisée ;
sélectionner (920) un ou plusieurs composants de réseau dans une liste de composants de réseau pour prendre en charge la transition de noeud décrite reçue ; et
configurer (930) au moins l'un des composants de réseau sélectionnés sur la base d'une ressource du composant sélectionné et de la description de la transition du noeud.

15. Réseau selon la revendication 14, dans lequel le deuxième composant de réseau ayant le processeur et le système logique pouvant s'exécuter sur ce dernier comprend en outre un système logique pouvant être exécuté sur ce dernier pour :
fournir (740) une liste de noeuds, la liste comportant au moins un noeud.

16. Réseau selon la revendication 15, dans lequel la fourniture (740) de la liste de noeuds consiste à fournir la liste de noeuds dans la sous-section spécifiée de type de topologie du réseau.

17. Réseau selon la revendication 14, dans lequel le premier composant de réseau est un serveur de protocole de Configuration Dynamique d'Hôte (DHCP pour Dynamic Host Configuration Protocol).

18. Procédé selon la revendication 14, dans lequel le deuxième composant de réseau est un noeud de commande.

19. Article de fabrication comprenant :
un support accessible électroniquement fournissant des instructions qui, lorsqu'elles sont exécutées par un appareil, font en sorte que l'appareil :
catégorise (710) un sous-réseau en un groupement de sous-réseaux sur la base, au moins en partie, du fait de savoir si le sous-réseau est associé à une interface non sécurisée d'un pare-feu ou à une interface sécurisée d'un pare-feu, dans lequel des sous-réseaux appartenant à un groupement de sous-réseaux peuvent conduire les uns vers les autres ;
fournisse (720) une sous-section de sous-réseau pour le sous-réseau appartenant au groupement de sous-réseaux catégorisé ; et
spécifie (730) une sous-section de type de topologie de réseau dans la sous-section de sous-réseau fournie,
consistant en outre à :
recevoir (910) une description d'une transition pour le noeud, la description ayant pour base des termes de la syntaxe du réseau décrit ;
sélectionner (920) un ou plusieurs composants de réseau dans une liste de composants de réseau pour prendre en charge la transition de noeud décrite reçue ; et
configurer (930) au moins l'un des composants de réseau sélectionnés sur la base d'une ressource du composant sélectionné et de la description de la transition du noeud.

20. Article de fabrication selon la revendication 19, dans lequel le support accessible électroniquement fournit en outre des instructions qui, lorsqu'elles sont exécutées par un appareil, font en sorte que l'appareil :
fournisse (740) une liste de noeuds, la liste devant contenir au moins un noeud.

21. Article de fabrication selon la revendication 20, dans lequel le support accessible électroniquement fournissant des instructions qui, lorsqu'elles sont exécutées par l'appareil, font en sorte que l'appareil fournisse (740) la liste de noeuds dans la sous-section spécifiée de type de topologie du réseau.

22. Article de fabrication selon la revendication 20, dans lequel le support accessible électroniquement fournissant des instructions qui, lorsqu'elles sont exécutées par l'appareil, font en sorte que l'appareil fournisse (740) la liste de noeuds, la liste devant contenir au moins un noeud, fait en sorte que l'appareil fournisse une position de départ sur le réseau pour le noeud figurant dans la liste.

23. Article de fabrication selon la revendication 20, dans lequel le support accessible électroniquement fournissant des instructions qui, lorsqu'elles sont exécutées par l'appareil, font en sorte que l'appareil catégorise (710) le sous-réseau en un groupement de sous-réseaux, fait en sorte que l'appareil catégorise le sous-réseau en un groupe de sous-réseaux qui est associé à une interface non sécurisée d'un groupement de sous-réseaux de pare-feu ou à une interface sécurisée d'un groupement de sous-réseau de pare-feu.

24. Article de fabrication selon la revendication 19, dans lequel le support accessible électroniquement fournissant des instructions qui, lorsqu'elles sont exécutées par l'appareil, font en sorte que l'appareil catégorise (710) le sous-réseau en l'interface non sécurisée d'un groupement de sous-réseaux de pare-feu, ou en l'interface sécurisée d'un groupement de sous-réseau de pare-feu, fait en sorte que l'appareil :
place le sous-réseau dans l'interface non sécurisée d'un groupement de sous-réseaux de pare-feu si le sous-réseau est associé à une interface externe d'un Réseau Privé Virtuel (VPN pour Virtual Private Network) ; et
place le sous-réseau dans l'interface sécurisée d'un groupement de sous-réseaux de pare-feu si le sous-réseau est associé à une interface interne du VPN.
